# EUROPEAN PATENT APPLICATION

(11) **EP 4 380 296 A1**
(43) Date of publication of application: **05.06.2024**
(21) Application number: 22848131.3
(22) Date of filing: 23.06.2022
(51) Int. Cl.: H04W 76/15, G06Q 20/32

(54) **ORDER PAYMENT METHOD AND APPARATUS, AND STORAGE MEDIUM, DEVICE AND SYSTEM**

(30) Priority: 27.07.2021 CN 202110850722
(71) Applicant: ZTE Corporation, Shenzhen, Guangdong 518057 (CN)
(72) Inventor: WANG, Cheng, Shenzhen, Guangdong 518057 (CN)
(74) Representative: Ipsilon
(86) International application number: PCT/CN2022/100722
(87) International publication number: WO 2023/005524

(57) **Abstract**

The present disclosure discloses an order payment method and apparatus, a storage medium, a device, and a system, and belongs to the field of payment technology. The method includes: initiating a payment call to a payment platform by a terminal; after the payment platform is connected with the payment call, establishing a real-time media data transmission channel and an IP Multimedia Subsystem (IMS) data channel with the payment platform; and performing order payment through the real-time media data transmission channel or the IMS data channel.

## Description

### CROSS-REFERENCE TO RELATED APPLICATION

The present disclosure claims the priority to Chinese Patent Application CN202110850722.6 entitled "ORDER PAYMENT METHOD AND APPARATUS, AND STORAGE MEDIUM, DEVICE AND SYSTEM" and filed on July 27, 2021, the content of which is incorporated herein by reference in their entirety.

### TECHNICAL FIELD

Embodiments of the present disclosure relate to the field of payment technology, and in particular, to an order payment method and apparatus, a storage medium, a device, and a system.

### BACKGROUND

At present, for completing payment of an order, the following operations may be performed by a terminal: connecting to a Wireless Fidelity (WIFI) network, scanning a payment code of a merchant through pre-installed payment application, sending the payment code to a payment platform through the WIFI network, receiving an order confirm request sent by the payment platform through the WIFI network, and sending payment information to the payment platform through the WIFI network.

In the above order payment process, the user needs to install the payment application in the terminal. In a case where an old person cannot install the payment application, the order payment cannot be performed. In addition, whether the order payment is successful depends on the quality of the WIFI network, so that the order payment may fail when the quality of the WIFI network is poor.

### SUMMARY

The embodiments of the present disclosure provide an order payment method and apparatus, a storage medium, a device, and a system, so as to solve the problems that order payment can be performed merely by installing payment application in a terminal and the order payment may fail due to poor quality of a WIFI network.

Provided is an order payment method, including: initiating a payment call to a payment platform by a terminal; after the payment platform is connected with the payment call, establishing a real-time media data transmission channel and an IP Multimedia Subsystem (IMS) data channel with the payment platform; and performing order payment through the real-time media data transmission channel or the IMS data channel.

Provided is an order payment method, including: receiving, by a payment platform, a payment call initiated by a terminal; when connected with the payment call, establishing a real-time media data transmission channel and an IP Multimedia Subsystem (IMS) data channel with the terminal; and performing order payment through the real-time media data transmission channel or the IMS data channel.

Provided is an order payment apparatus, including: a calling module configured to initiate a payment call to a payment platform; a first establishment module configured to establish, after the payment platform is connected with the payment call, a real-time media data transmission channel and an IP Multimedia Subsystem (IMS) data channel with the payment platform; and a first payment module configured to perform order payment through the real-time media data transmission channel or the IMS data channel.

Provided is an order payment apparatus, including: a receiving module configured to receive a payment call initiated by a terminal; a second establishment module configured to establish, when connected with the payment call, a real-time media data transmission channel and an IP Multimedia Subsystem (IMS) data channel with the terminal; and a second payment module configured to perform order payment through the real-time media data transmission channel or the IMS data channel.

Provided is a computer-readable storage medium having at least one instruction, at least one program, and a code set or an instruction set stored therein, and the at least one instruction, the at least one program, and the code set or the instruction set are loaded and executed by a processor to implement the order payment methods described above.

Provided is a terminal, including a processor and a memory having at least one instruction stored therein, and the at least one instruction is loaded and executed by the processor to implement the order payment method described above.

Provided is a payment platform, including a processor and a memory having at least one instruction stored therein, and the at least one instruction is loaded and executed by the processor to implement the order payment method described above.

Provided is a payment system, including the above-described terminal and the above-described payment platform.

### BRIEF DESCRIPTION OF DRAWINGS

In order to describe the technical solutions in the embodiments of the present disclosure more clearly, the drawings for the description of the embodiments will be simply described below. Apparently, the drawings described below are merely for some embodiments of the present disclosure, and other drawings can be derived from the described drawings by those of ordinary skill in the art without inventive work.
FIG. 1 is a schematic structural diagram of a payment system according to an embodiment of the present disclosure;
FIG. 2 is a flowchart illustrating an order payment method according to an embodiment of the present disclosure;
FIG. 3 is a flowchart illustrating an order payment method according to an embodiment of the present disclosure;
FIG. 4 is a flowchart illustrating an order payment method according to an embodiment of the present disclosure;
FIG. 5 is a flowchart illustrating an order payment method according to an embodiment of the present disclosure;
FIG. 6 is a block diagram of an order payment apparatus according to another embodiment of the present disclosure; and
FIG. 7 is a block diagram of an order payment apparatus according to still another embodiment of the present disclosure.

### DETAIL DESCRIPTION OF EMBODIMENTS

In order to make the objectives, technical solutions, and advantages of the embodiments of the present disclosure clearer, implementations of the present disclosure will be further described in detail below with reference to the accompanying drawings.

In the era of 5th Generation Mobile Communication Technology (5G), real-time communication is still an indispensable basic service capability. As continuous coverage of 5G networks is gradually realized and 3rd Generation Partnership Project (3GPP) 5G Voice over New Radio (VoNR) standards become mature, an all-media value-added service based on 5G VoNR ultra-high-definition multimedia communication capability, i.e., 5G VoNR+, will further improve 4th Generation Mobile Communication Technology (4G) Voice over Long-Term Evolution (VoLTE) service experience and enrich service connotations. 5G VoNR+ refers to carrying a new data transmission channel based on 5G VoNR multimedia real-time communication, and can provide richer real-time interactive services besides high-definition audio and video for users, build a unified open network architecture with a multimedia real-time communication capability platform as a center, and realize agile development and rapid deployment of innovative services based on compatibility with existing services. The 3GPP has already completed technical standards related to IP Multimedia Subsystem (IMS) Data Channel (IMS data channel) of the 5G networks, and the technical standards are written in TS26.114 V16.5.0 version released in March 2020. Thus, the 5G VoNR service capabilities are enhanced, and those service capabilities will further extend sensory experience of communication between people and open up a brand-new era of multimedia real-time communication between people, between people and things, and between things.

The Global System for Mobile Communications Association (GSMA) proposes Enriched Calling in Rich Communication Suite (RCS), which introduces enriched capabilities into calls. The Enriched Calling technology can be applied to VoLTE/VoNR calls, and meet requirements in some application scenarios of real-time data interaction, such as transmission of information such as texts, pictures, and positions before the calls, and sharing of files and sharing of screen marks during the calls.

The 3GPP also formulates standards for the IMS data channel. According to the standards, VoLTE/VoNR high-definition audio/video calls are combined with Web Real-Time Communication (WebRTC) technology, the IMS data channel is provided through extension, and voice and video calls are synchronized with the extended data channel, so as to realize, in high-definition video calls, screen sharing together with Augmented Reality (AR), even an full-immersive experience with synchronization of hearing, vision, touch, and kinesthesia. The IMS data channel provides a single-stream or multi-stream data interaction channel with high real-time performance based on the User Datagram Protocol (UDP), and can enable desktop sharing, whiteboard sharing, and file sending at the same time during a call. The IMS data channel can flexibly support various data channel modes such as a reliable transmission mode, a partial reliable transmission mode, and an unreliable transmission mode, and can also meet diverse demands of various applications for underlying channels. The IMS data channel does not consider content transmitted therein and format of the content, and it merely requires two communication parties to be consistent in communication format. Diverse application content can be transmitted through the IMS data channel using a Webpage+JavaScript common mode, so as to support rapid innovation, rapid deployment, and rapid launch of new services. Based on the extended data channel, a user can play a same game, or watch a same video, or share a same wonderful piece of music with family members or friends while chatting with the family members or friends through a video call. The extended data channel tougher with AR can also be applied to a remote maintenance scene in the industry. Furthermore, the extended data channel can also synchronize sound, video, touch, and kinesthesia to implement real-time interactive application such as remote medical treatment.

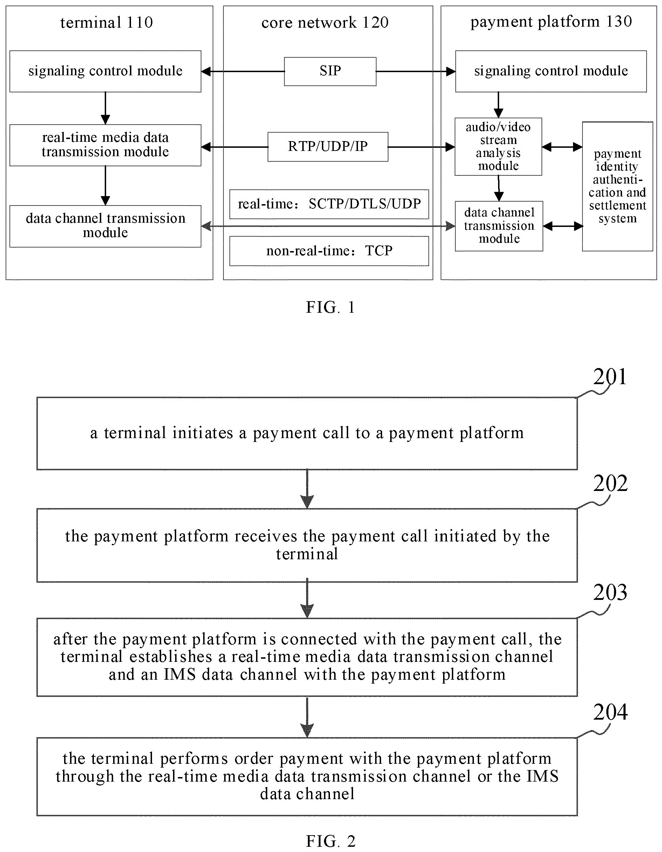

The present disclosure is applicable to a payment system supporting the data channel defined in the TS26.114 of the 3GPP. With reference to FIG. 1, the payment system may include a terminal 110, a core network 120, and a payment platform 130. The terminal 110, the core network 120, and the payment platform 130 may be connected to one another with any suitable connection method, such as through a wired network or a wireless network.

The terminal 110 may also be called a 5G VoNR+ terminal, and the 5G VoNR+ terminal applicable to the present disclosure is desired to have the following functions: 1) the 5G VoNR+ terminal is desired to support 3GPP TS26.114 DCMTSI (A Data Channel Capable MTSI Client) client capability, and establish an IMS data channel through a Session Description Protocol (SDP) negotiation mechanism; 2) the 5G VoNR+ terminal is desired to support a Web engine to process service data of the IMS data channel in real time, and present the service data in a User Interface (UI) in real time; and 3) the 5G VoNR+ terminal is desired to support negotiation of Quality of Service (QoS) indicators such as service bandwidth, delay, and packet loss rate according to reliability requirements of interactive services.

In an implementation, the terminal 110 may include a signaling control module, a real-time media data transmission module, and a data channel transmission module. In an implementation, the payment platform 130 may include a signaling control module, an audio/video stream analysis module, a data channel transmission module, and a payment identity authentication and settlement system. The terminal 110 and the payment platform 130 may further include other modules that are not limited in the present embodiment.

After the terminal 110 is powered on, the terminal 110 may establish an IMS signaling channel with the payment platform 130 through the core network 120. That is, the IMS signaling channel is established between the two signaling control modules through the Session Initiation Protocol (SIP). In this way, an SIP signaling may be transmitted between the two signaling control modules through the core network 120 to establish a payment call.

After the payment call is established, the terminal 110 may establish a real-time media data transmission channel with the payment platform 130 through the core network 120. That is, the real-time media data transmission channel is established between the real-time media data transmission module and the audio/video stream analysis module through the Real-time Transport Protocol (RTP), or the UDP, or the Internet Protocol (IP), so as to transmit audio/video data.

After the payment call is established, the terminal 110 may establish an IMS data channel with the payment platform 130 through the core network 120. That is, the two data channel transmission modules perform real-time communication through the Stream Control Transmission Protocol (SCTP), the Datagram Transport Layer Security (DTLS) protocol, or the UDP, and perform non-real-time communication through the Transmission Control Protocol (TCP).

All content transmitted between the terminal 110 and the payment platform 130 needs to be transferred through the core network 120, which will not be repeated below.

In the present disclosure, the IMS data channel technology is introduced based on 5G VoNR. The payment platform 130 establishes a VoNR call access port adopting the IMS data channel technology. The terminal 110 establishes one IMS signaling channel, one real-time media data transmission channel, and one IMS data channel for reliable data transmission by dialing a number of the payment platform 130, and completes order payment through the three channels.

In the present disclosure, an order payment method is introduced through four embodiments. The first embodiment describes a process of completing order payment by the terminal interacting with the payment platform; the second embodiment describes a process of completing the order payment by the terminal scanning a payment code and sending the payment code to the payment platform; the third embodiment describes a process of completing the order payment by the terminal displaying a payment code and a code scanning terminal sending the payment code to the payment platform; and the fourth embodiment describes a process of completing the order payment by the terminal shopping online and interacting with the payment platform.

With reference to FIG. 2 which is a flowchart illustrating an order payment method according to an embodiment of the present disclosure, the order payment method may be applied to the payment system shown in FIG. 1, and may include the following operations 201 to 204.

In operation 201, a terminal initiates a payment call to a payment platform.

Each payment platform corresponds to a different number. For example, a number of a first payment platform is 000001, a number of a second payment platform is 000002, a number of a third payment platform is 000003, and a number of a fourth payment platform is 0000010.

In an implementation, the terminal may initiate the payment call to the payment platform just by dialing the number of the payment platform. The terminal may dial the number under the control of a user or may automatically dial the number according to scene recognition, which is not limited in the present embodiment.

In operation 202, the payment platform receives the payment call initiated by the terminal.

In operation 203, after the payment platform is connected with the payment call, the terminal establishes a real-time media data transmission channel and an IMS data channel with the payment platform.

In operation 204, the terminal performs order payment with the payment platform through the real-time media data transmission channel or the IMS data channel.

The operations 201, 203 and 204 can be implemented independently as embodiments of the side of the terminal, and the operations 202 to 204 can be implemented independently as embodiments of the side of the payment platform.

In summary, according to the order payment method provided by the embodiment of the present disclosure, the payment call is initiated to the payment platform, the real-time media data transmission channel and the IMS data channel are established with the payment platform after the payment platform is connected with the payment call, and then the order payment is performed with the payment platform through the real-time media data transmission channel or the IMS data channel. Thus, with no need to install payment application to scan a payment code, the user can perform the order payment merely by initiating the payment call, which enables the old people to perform order payment and reduces a barrier to use of order payment. In addition, the terminal can perform the order payment with the payment platform through the real-time media data transmission channel or the IMS data channel without depending on the WIFI network, so that a success rate of order payment can be improved. Furthermore, by performing the payment through the IMS data channel, the QoS can be effectively guaranteed, and a phenomenon of payment delay caused by network congestion can be effectively avoided.

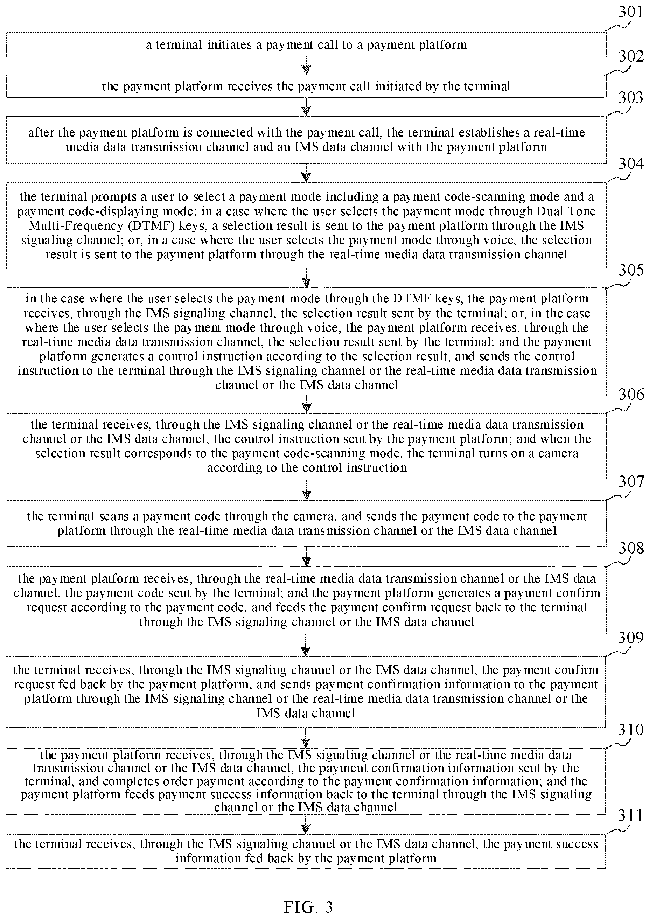

With reference to FIG. 3 which is a flowchart illustrating the order payment method according to another embodiment of the present disclosure, the order payment method may be applied to the payment system shown in FIG. 1, and the present embodiment is described by taking a case where payment is performed by scanning a payment code as an example. The order payment method may include the following operations 301 to 311.

In operation 301, a terminal initiates a payment call to a payment platform.

Each payment platform corresponds to a different number. For example, a number of a first payment platform is 000001, a number of a second payment platform is 000002, a number of a third payment platform is 000003, and a number of a fourth payment platform is 0000010.

In an implementation, initiating the payment call to the payment platform may include: establishing an IMS signaling channel when the terminal is powered on; receiving a payment call instruction configured to instruct the terminal to initiate the payment call to the payment platform; and sending an SIP signaling to the payment platform through the IMS signaling channel, so as to initiate the payment call.

Receiving the payment call instruction may include: receiving a dialing operation triggered by a user, and determining that the payment call instruction is received if the dialing operation carries the number of the payment platform.

For example, when the user wants to select the first payment platform to perform order payment, the user may trigger the dialing operation on the terminal and input the number of 000001. The terminal detects whether 000001 is the number corresponding to the payment platform, and if 000001 is the number corresponding to the payment platform, the terminal determines that the payment call instruction is received, and initiates the payment call to the first payment platform.

In operation 302, the payment platform receives the payment call initiated by the terminal.

In an implementation, receiving the payment call initiated by the terminal may include: receiving, through the IMS signaling channel, the SIP signaling sent by the terminal.

In operation 303, after the payment platform is connected with the payment call, the terminal establishes a real-time media data transmission channel and an IMS data channel with the payment platform.

In operation 304, the terminal prompts a user to select a payment mode including a payment code-scanning mode and a payment code-displaying mode; in a case where the user selects the payment mode through Dual Tone Multi-Frequency (DTMF) keys, a selection result is sent to the payment platform through the IMS signaling channel; or, in a case where the user selects the payment mode through voice, the selection result is sent to the payment platform through the real-time media data transmission channel.

The terminal can play voice to prompt the user to select the payment mode. In an implementation, different values may be used to represent different payment modes, for example, 0 represents the payment code-scanning mode, and 1 represents the payment code-displaying mode.

The user may select the payment mode through the DTMF keys, then the terminal generates the selection result (e.g., 0 or 1) according to the selection of the user, and sends the selection result to the payment platform by sending an SIP signaling through the IMS signaling channel. Or, the user may select the payment mode through voice, then the terminal takes the voice as the selection result, and sends the selection result to the payment platform through the real-time media data transmission channel.

In operation 305, in the case where the user selects the payment mode through the DTMF keys, the payment platform receives, through the IMS signaling channel, the selection result sent by the terminal; or, in the case where the user selects the payment mode through voice, the payment platform receives, through the real-time media data transmission channel, the selection result sent by the terminal; and the payment platform generates a control instruction according to the selection result, and sends the control instruction to the terminal through the IMS signaling channel or the real-time media data transmission channel or the IMS data channel.

The channel for the payment platform to receive the selection result and the channel for the payment platform to send the control instruction may be the same or different. For example, the payment platform may receive the selection result through the IMS signaling channel, and send the control instruction through the IMS signaling channel; or, the payment platform may receive the selection result through the IMS signaling channel, and send the control instruction through the real-time media data transmission channel.

In operation 306, the terminal receives, through the IMS signaling channel or the real-time media data transmission channel or the IMS data channel, the control instruction sent by the payment platform; and when the selection result corresponds to the payment code-scanning mode, the terminal turns on a camera according to the control instruction.

The control instruction is configured to instruct the terminal to turn on the camera.

In operation 307, the terminal scans a payment code through the camera, and sends the payment code to the payment platform through the real-time media data transmission channel or the IMS data channel.

The terminal may send the payment code in various ways, and two of the sending ways are described below.

In a first sending way, if the payment code is recorded to obtain a first video, the terminal sends the first video to the payment platform through the real-time media data transmission channel.

In a second sending way, if the payment code is photographed to obtain a first image, the terminal sends the first image to the payment platform through the IMS data channel.

The terminal may also analyze the payment code to obtain order information such as a merchant account and a payment amount, and send the order information to the payment platform.

In operation 308, the payment platform receives, through the real-time media data transmission channel or the IMS data channel, the payment code sent by the terminal; and the payment platform generates a payment confirm request according to the payment code, and feeds the payment confirm request back to the terminal through the IMS signaling channel or the IMS data channel.

In response to the first sending way, the payment platform receives, through the real-time media data transmission channel, the first video sent by the terminal, and analyzes the first video to obtain the payment code.

In response to the second sending way, the payment platform receives, through the IMS data channel, the first image sent by the terminal, and analyzes the first image to obtain the payment code.

The payment platform may also analyze the payment code to obtain the order information such as the merchant account and the payment amount, and generate the payment confirm request according to the order information.

The channel for the payment platform to receive the payment code and the channel for the payment platform to feed back the payment confirm request may be the same or different. For example, the payment platform may receive the payment code through the IMS data channel, and feed the payment confirm request back through the IMS data channel; or, the payment platform may receive the payment code through the IMS data channel, and feed the payment confirm request back through the IMS signaling channel.

If what is received by the payment platform is the order information, the payment platform may directly generate the payment confirm request according to the order information.

In operation 309, the terminal receives, through the IMS signaling channel or the IMS data channel, the payment confirm request fed back by the payment platform, and sends payment confirmation information to the payment platform through the IMS signaling channel or the real-time media data transmission channel or the IMS data channel.

The channel for the terminal to receive the payment confirm request and the channel for the terminal to send the payment confirmation information may be the same or different. For example, the terminal may receive the payment confirm request through the IMS data channel, and send the payment confirmation information through the IMS data channel; or, the terminal may receive the payment confirm request through the IMS data channel, and send the payment confirmation information through the real-time media data transmission channel.

In an implementation, sending the payment confirmation information to the payment platform through the IMS signaling channel or the real-time media data transmission channel or the IMS data channel may include:
in a case where payment is performed without a password, receiving the payment confirmation information input by the user, and sending the payment confirmation information to the payment platform through the IMS signaling channel; or,
in a case where the payment is performed with a password, receiving the password input by the user, and sending the payment confirmation information carrying the password to the payment platform through the IMS signaling channel or the IMS data channel; or,
in a case where the payment is performed through face recognition and a face of the user is recorded to obtain a second video, sending the payment confirmation information carrying the second video to the payment platform through the real-time media data transmission channel; or,
in a case where the payment is performed through face recognition and the face of the user is photographed to obtain a second image, sending the payment confirmation information carrying the second image to the payment platform through the IMS data channel.

In the present embodiment, the terminal may select a corresponding channel according to the payment mode, and then send the payment confirmation information through the channel.

In operation 310, the payment platform receives, through the IMS signaling channel or the real-time media data transmission channel or the IMS data channel, the payment confirmation information sent by the terminal, and completes order payment according to the payment confirmation information; and the payment platform feeds payment success information back to the terminal through the IMS signaling channel or the IMS data channel.

The channel for the payment platform to receive the payment confirmation information and the channel for the payment platform to feed back the payment success information may be the same or different. For example, the payment platform may receive the payment confirmation information through the IMS data channel, and feed the payment success information back through the IMS data channel; or, the payment platform may receive the payment confirmation information through the IMS data channel, and feed the payment success information back through the IMS signaling channel.

In an implementation, receiving, through the IMS signaling channel or the real-time media data transmission channel or the IMS data channel, the payment confirmation information sent by the terminal may include:
in the case where the payment is performed without the password, receiving, through the IMS signaling channel, the payment confirmation information sent by the terminal, with the payment confirmation information input to the terminal by the user; or,
in the case where the payment is performed with the password, receiving, through the IMS signaling channel or the IMS data channel, the payment confirmation information carrying the password sent by the terminal, with the password input to the terminal by the user; or,
in the case where the payment is performed through face recognition, receiving, through the real-time media data transmission channel, the payment confirmation information carrying the second video sent by the terminal, with the second video obtained by recording the face of the user by the terminal; or,
in the case where the payment is performed through face recognition, receiving, through the IMS data channel, the payment confirmation information carrying the second image sent by the terminal, with the second image obtained by photographing the face of the user by the terminal.

In the case where the payment confirmation information carries the password, the payment platform may perform identity authentication on the user according to the password, and complete the order payment after the authentication is successful. In the case where the payment confirmation information carries the second video, the payment platform may analyze the second video to obtain face information, perform identity authentication on the user according to the face information, and complete the order payment after the authentication is successful. In the case where the payment confirmation information carries the second image, the payment platform may analyze the second image to obtain face information, perform identity authentication on the user according to the face information, and complete the order payment after the authentication is successful.

In operation 311, the terminal receives, through the IMS signaling channel or the IMS data channel, the payment success information fed back by the payment platform.

The operations 301, 303, 304, 306, 307, 309 and 311 can be implemented independently as embodiments of the side of the terminal, and the operations 302, 303, 305, 308 and 310 can be implemented independently as embodiments of the side of the payment platform.

In summary, according to the order payment method provided by the embodiment of the present disclosure, the payment call is initiated to the payment platform, the real-time media data transmission channel and the IMS data channel are established with the payment platform after the payment platform is connected with the payment call, and then the order payment is performed with the payment platform through the real-time media data transmission channel or the IMS data channel. Thus, with no need to install payment application to scan the payment code, the user can perform the order payment merely by initiating the payment call, which enables the old people to perform order payment and reduces a barrier to use of order payment. In addition, the terminal can perform the order payment with the payment platform through the real-time media data transmission channel or the IMS data channel without depending on the WIFI network, so that a success rate of order payment can be improved. Furthermore, by performing the payment through the IMS data channel, the QoS can be effectively guaranteed, and a phenomenon of payment delay caused by network congestion can be effectively avoided.

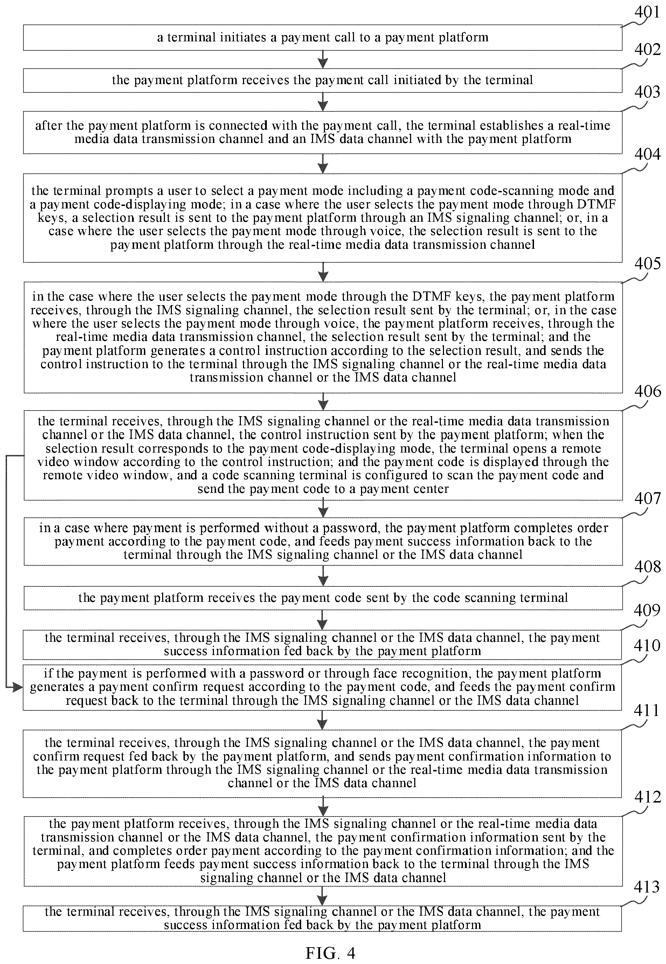

With reference to FIG. 4 which is a flowchart illustrating an order payment method according to another embodiment of the present disclosure, the order payment method may be applied to the payment system shown in FIG. 1, and the present embodiment is described by taking a case where payment is performed by displaying a payment code as an example. The order payment method may include the following operations 401 to 413.

In operation 401, a terminal initiates a payment call to a payment platform.

In operation 402, the payment platform receives the payment call initiated by the terminal.

In operation 403, after the payment platform is connected with the payment call, the terminal establishes a real-time media data transmission channel and an IMS data channel with the payment platform.

In operation 404, the terminal prompts a user to select a payment mode including a payment code-scanning mode and a payment code-displaying mode; in a case where the user selects the payment mode through DTMF keys, a selection result is sent to the payment platform through an IMS signaling channel; or, in a case where the user selects the payment mode through voice, the selection result is sent to the payment platform through the real-time media data transmission channel.

Reference may be made to the description of the operations 301 to 304 for implementation processes of the operations 401 to 404, which will not be described in detail here.

In operation 405, in the case where the user selects the payment mode through the DTMF keys, the payment platform receives, through the IMS signaling channel, the selection result sent by the terminal; or, in the case where the user selects the payment mode through voice, the payment platform receives, through the real-time media data transmission channel, the selection result sent by the terminal; and the payment platform generates a control instruction according to the selection result, and sends the control instruction to the terminal through the IMS signaling channel or the real-time media data transmission channel or the IMS data channel.

The channel for the payment platform to receive the selection result and the channel for the payment platform to send the control instruction may be the same or different. For example, the payment platform may receive the selection result through the IMS signaling channel, and send the control instruction through the IMS signaling channel; or, the payment platform may receive the selection result through the IMS signaling channel, and send the control instruction through the real-time media data transmission channel.

In the present embodiment, a payment code displayed by the terminal may be generated by the terminal or the payment platform, and the two cases are described separately below.

In a first implementation way, the payment code is generated by the terminal, then the payment platform sends the control instruction which does not carry the payment code to the terminal through the IMS signaling channel.

In a second implementation way, the payment code is generated by the payment platform and carried in the control instruction, then the payment platform sends the control instruction carrying a third video to the terminal through the real-time media data transmission channel, with the third video obtained by recording the payment code.

In a third implementation way, the payment code is generated by the payment platform and carried in the control instruction, then the payment platform sends the control instruction carrying a third image to the terminal through the IMS data channel, with the third image obtained by photographing the payment code.

In operation 406, the terminal receives, through the IMS signaling channel or the real-time media data transmission channel or the IMS data channel, the control instruction sent by the payment platform; when the selection result corresponds to the payment code-displaying mode, the terminal opens a remote video window according to the control instruction; and the payment code is displayed through the remote video window, and a code scanning terminal is configured to scan the payment code and send the payment code to the payment platform.

In response to the first implementation way, the terminal receives the control instruction which does not carry the payment code through the IMS signaling channel. The terminal opens the remote video window according to the control instruction, generates the payment code, and displays the payment code in the remote video window for a code scanning terminal of a merchant to scan.

In response to the second implementation way, the terminal receives the control instruction carrying the third video through the real-time media data transmission channel, with the third video obtained by recording the payment code. The terminal opens the remote video window according to the control instruction, and plays the third video in the remote video window for the code scanning terminal of the merchant to scan.

In response to the third implementation way, the terminal receives the control instruction carrying the third image through the IMS data channel, with the third image obtained by photographing the payment code. The terminal opens the remote video window according to the control instruction, and displays the third image in the remote video window for the code scanning terminal of the merchant to scan.

After the code scanning terminal obtains the payment code, the code scanning terminal may send the payment code to the payment platform through connection with the payment platform.

In operation 407, the payment platform receives the payment code sent by the code scanning terminal.

In operation 408, in a case where payment is performed without a password, the payment platform completes order payment according to the payment code, and feeds payment success information back to the terminal through the IMS signaling channel or the IMS data channel.

In operation 409, the terminal receives, through the IMS signaling channel or the IMS data channel, the payment success information fed back by the payment platform, and the process is ended.

In operation 410, if the payment is performed with a password or through face recognition, the payment platform generates a payment confirm request according to the payment code, and feeds the payment confirm request back to the terminal through the IMS signaling channel or the IMS data channel.

The payment platform may also analyze the payment code to obtain order information such as a merchant account and a payment amount, and generate the payment confirm request according to the order information.

In operation 411, the terminal receives, through the IMS signaling channel or the IMS data channel, the payment confirm request fed back by the payment platform, and sends payment confirmation information to the payment platform through the IMS signaling channel or the real-time media data transmission channel or the IMS data channel.

The channel for the terminal to receive the payment confirm request and the channel for the terminal to send the payment confirmation information may be the same or different. For example, the terminal may receive the payment confirm request through the IMS data channel, and send the payment confirmation information through the IMS data channel; or, the terminal may receive the payment confirm request through the IMS data channel, and send the payment confirmation information through the real-time media data transmission channel.

In an implementation, sending the payment confirmation information to the payment platform through the IMS signaling channel or the real-time media data transmission channel or the IMS data channel may include:
in the case where the payment is performed with the password, receiving the password input by the user, and sending the payment confirmation information carrying the password to the payment platform through the IMS signaling channel or the IMS data channel; or,
in a case where the payment is performed through face recognition and a face of the user is recorded to obtain a second video, sending the payment confirmation information carrying the second video to the payment platform through the real-time media data transmission channel; or,
in a case where the payment is performed through face recognition and the face of the user is photographed to obtain a second image, sending the payment confirmation information carrying the second image to the payment platform through the IMS data channel.

In the present embodiment, the terminal may select a corresponding channel according to the payment mode, and then send the payment confirmation information through the channel.

In operation 412, the payment platform receives, through the IMS signaling channel or the real-time media data transmission channel or the IMS data channel, the payment confirmation information sent by the terminal, and completes order payment according to the payment confirmation information; and the payment platform feeds payment success information back to the terminal through the IMS signaling channel or the IMS data channel.

The channel for the payment platform to receive the payment confirmation information and the channel for the payment platform to feed back the payment success information may be the same or different. For example, the payment platform may receive the payment confirmation information through the IMS data channel, and feed the payment success information back through the IMS data channel; or, the payment platform may receive the payment confirmation information through the IMS data channel, and feed the payment success information back through the IMS signaling channel.

In an implementation, receiving, through the IMS signaling channel or the real-time media data transmission channel or the IMS data channel, the payment confirmation information sent by the terminal may include:
in the case where the payment is performed with the password, receiving, through the IMS signaling channel or the IMS data channel, the payment confirmation information carrying the password sent by the terminal, with the password input to the terminal by the user; or,
in the case where the payment is performed through face recognition, receiving, through the real-time media data transmission channel, the payment confirmation information carrying the second video sent by the terminal, with the second video obtained by recording the face of the user by the terminal; or,
in the case where the payment is performed through face recognition, receiving, through the IMS data channel, the payment confirmation information carrying the second image sent by the terminal, with the second image obtained by photographing the face of the user by the terminal.

In the case where the payment confirmation information carries the password, the payment platform may perform identity authentication on the user according to the password, and complete the order payment after the authentication is successful. In the case where the payment confirmation information carries the second video, the payment platform may analyze the second video to obtain face information, perform identity authentication on the user according to the face information, and complete the order payment after the authentication is successful. In the case where the payment confirmation information carries the second image, the payment platform may analyze the second image to obtain face information, perform identity authentication on the user according to the face information, and complete the order payment after the authentication is successful.

In operation 413, the terminal receives, through the IMS signaling channel or the IMS data channel, the payment success information fed back by the payment platform.

The operations 401, 403, 404, 406, 407, 410, 412 and 414 can be implemented independently as embodiments of the side of the terminal, and the operations 402, 403, 405, 408, 409, 411 and 413 can be implemented independently as embodiments of the side of the payment platform.

In summary, according to the order payment method provided by the embodiment of the present disclosure, the payment call is initiated to the payment platform, the real-time media data transmission channel and the IMS data channel are established with the payment platform after the payment platform is connected with the payment call, and then the order payment is performed with the payment platform through the real-time media data transmission channel or the IMS data channel. Thus, with no need to install payment application to scan the payment code, the user can perform the order payment merely by initiating the payment call, which enables the old people to perform order payment and reduces a barrier to use of order payment. In addition, the terminal can perform the order payment with the payment platform through the real-time media data transmission channel or the IMS data channel without depending on the WIFI network, so that a success rate of order payment can be improved. Furthermore, by performing the payment through the IMS data channel, the QoS can be effectively guaranteed, and a phenomenon of payment delay caused by network congestion can be effectively avoided.

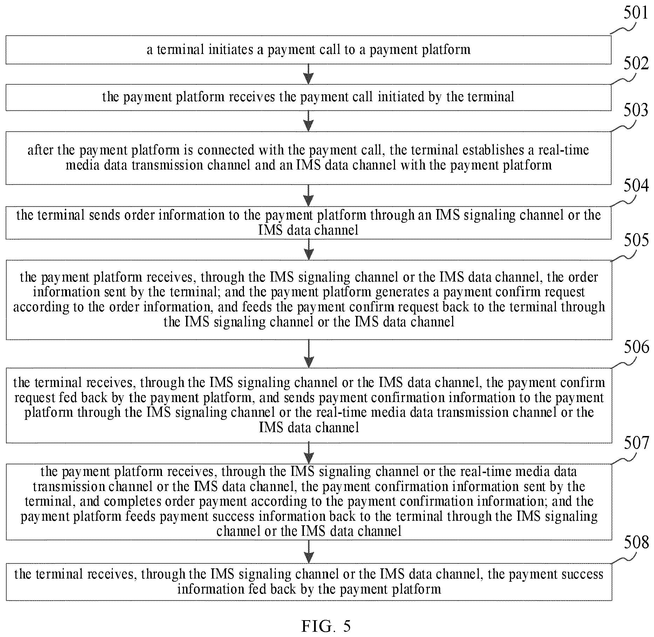

With reference to FIG. 5 which is a flowchart illustrating an order payment method according to another embodiment of the present disclosure, the order payment method may be applied to the payment system shown in FIG. 1, and the present embodiment is described by taking a case where payment is performed for online shopping as an example. The order payment method may include the following operations 501 to 508.

In operation 501, a terminal initiates a payment call to a payment platform.

When a user clicks a payment control corresponding to a certain payment platform to perform payment, the terminal receives a payment operation acted on the payment control by the user, and if the payment control corresponds to the payment platform, the terminal determines that a payment call instruction is received, and automatically dials a number corresponding to the payment platform.

In operation 502, the payment platform receives the payment call initiated by the terminal.

In operation 503, after the payment platform is connected with the payment call, the terminal establishes a real-time media data transmission channel and an IMS data channel with the payment platform.

In operation 504, the terminal sends order information to the payment platform through an IMS signaling channel or the IMS data channel.

In operation 505, the payment platform receives, through the IMS signaling channel or the IMS data channel, the order information sent by the terminal; and the payment platform generates a payment confirm request according to the order information, and feeds the payment confirm request back to the terminal through the IMS signaling channel or the IMS data channel.

The channel for the payment platform to receive the order information and the channel for the payment platform to feed back the payment confirm request may be the same or different. For example, the payment platform may receive the order information through the IMS data channel, and feed the payment confirm request back through the IMS data channel; or, the payment platform may receive the order information through the IMS data channel, and feed the payment confirm request back through the IMS signaling channel.

In operation 506, the terminal receives, through the IMS signaling channel or the IMS data channel, the payment confirm request fed back by the payment platform, and sends payment confirmation information to the payment platform through the IMS signaling channel or the real-time media data transmission channel or the IMS data channel.

The channel for the terminal to receive the payment confirm request and the channel for the terminal to send the payment confirmation information may be the same or different. For example, the terminal may receive the payment confirm request through the IMS data channel, and send the payment confirmation information through the IMS data channel; or, the terminal may receive the payment confirm request through the IMS data channel, and send the payment confirmation information through the real-time media data transmission channel.

In an implementation, sending the payment confirmation information to the payment platform through the IMS signaling channel or the real-time media data transmission channel or the IMS data channel may include:
in a case where payment is performed without a password, receiving the payment confirmation information input by the user, and sending the payment confirmation information to the payment platform through the IMS signaling channel; or,
in a case where the payment is performed with a password, receiving the password input by the user, and sending the payment confirmation information carrying the password to the payment platform through the IMS signaling channel or the IMS data channel; or,
in a case where the payment is performed through face recognition and a face of the user is recorded to obtain a second video, sending the payment confirmation information carrying the second video to the payment platform through the real-time media data transmission channel; or,
in a case where the payment is performed through face recognition and the face of the user is photographed to obtain a second image, sending the payment confirmation information carrying the second image to the payment platform through the IMS data channel.

In the present embodiment, the terminal may select a corresponding channel according to a payment mode, and then send the payment confirmation information through the channel.

In operation 507, the payment platform receives, through the IMS signaling channel or the real-time media data transmission channel or the IMS data channel, the payment confirmation information sent by the terminal, and completes order payment according to the payment confirmation information; and the payment platform feeds payment success information back to the terminal through the IMS signaling channel or the IMS data channel.

The channel for the payment platform to receive the payment confirmation information and the channel for the payment platform to feed back the payment success information may be the same or different. For example, the payment platform may receive the payment confirmation information through the IMS data channel, and feed the payment success information back through the IMS data channel; or, the payment platform may receive the payment confirmation information through the IMS data channel, and feed the payment success information back through the IMS signaling channel.

In an implementation, receiving, through the IMS signaling channel or the real-time media data transmission channel or the IMS data channel, the payment confirmation information sent by the terminal may include:
in the case where the payment is performed without the password, receiving, through the IMS signaling channel, the payment confirmation information sent by the terminal, with the payment confirmation information input to the terminal by the user; or,
in the case where the payment is performed with the password, receiving, through the IMS signaling channel or the IMS data channel, the payment confirmation information carrying the password sent by the terminal, with the password input to the terminal by the user; or,
in the case where the payment is performed through face recognition, receiving, through the real-time media data transmission channel, the payment confirmation information carrying the second video sent by the terminal, with the second video obtained by recording the face of the user by the terminal; or,
in the case where the payment is performed through face recognition, receiving, through the IMS data channel, the payment confirmation information carrying the second image sent by the terminal, with the second image obtained by photographing the face of the user by the terminal.

In the case where the payment confirmation information carries the password, the payment platform may perform identity authentication on the user according to the password, and complete the order payment after the authentication is successful. In the case where the payment confirmation information carries the second video, the payment platform may analyze the second video to obtain face information, perform identity authentication on the user according to the face information, and complete the order payment after the authentication is successful. In the case where the payment confirmation information carries the second image, the payment platform may analyze the second image to obtain face information, perform identity authentication on the user according to the face information, and complete the order payment after the authentication is successful.

In operation 508, the terminal receives, through the IMS signaling channel or the IMS data channel, the payment success information fed back by the payment platform.

The operations 501, 503, 504, 506 and 508 can be implemented independently as embodiments of the side of the terminal, and the operations 502, 503, 505 and 507 can be implemented independently as embodiments of the side of the payment platform.

In summary, according to the order payment method provided by the embodiment of the present disclosure, the payment call is initiated to the payment platform, the real-time media data transmission channel and the IMS data channel are established with the payment platform after the payment platform is connected with the payment call, and then the order payment is performed with the payment platform through the real-time media data transmission channel or the IMS data channel. Thus, with no need to install payment application to scan the payment code, the user can perform the order payment merely by initiating the payment call, which enables the old people to perform order payment and reduces a barrier to use of order payment. In addition, the terminal can perform the order payment with the payment platform through the real-time media data transmission channel or the IMS data channel without depending on the WIFI network, so that a success rate of order payment can be improved. Furthermore, by performing the payment through the IMS data channel, the QoS can be effectively guaranteed, and a phenomenon of payment delay caused by network congestion can be effectively avoided.

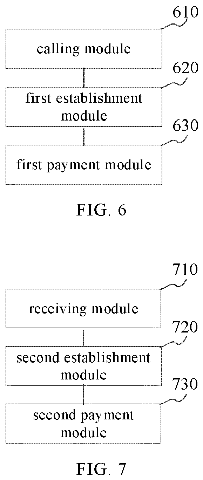

With reference to FIG. 6 which is a block diagram of an order payment apparatus according to an embodiment of the present disclosure, and the order payment apparatus may be applied in a terminal. The order payment apparatus may include:
a calling module 610 configured to initiate a payment call to a payment platform;
a first establishment module 620 configured to establish, after the payment platform is connected with the payment call, a real-time media data transmission channel and an IMS data channel with the payment platform; and
a first payment module 630 configured to perform order payment through the real-time media data transmission channel or the IMS data channel.

In an embodiment, the calling module 610 is further configured to:
establish an IMS signaling channel when a terminal is powered on;
receive a payment call instruction configured to instruct the terminal to initiate the payment call to the payment platform; and
send an SIP signaling to the payment platform through the IMS signaling channel, so as to initiate the payment call.

In an embodiment, the calling module 610 is further configured to:
receive a dialing operation triggered by a user, and determine that the payment call instruction is received if the dialing operation carries a number of the payment platform; or
receive a payment operation acted on a payment control by the user, and determine that the payment call instruction is received if the payment control corresponds to the payment platform.

In an embodiment, the first payment module 630 is further configured to:
in a case where the payment is performed in a payment code-scanning mode, scan a payment code through a camera;
send the payment code to the payment platform through the real-time media data transmission channel or the IMS data channel;
receive, through the IMS signaling channel or the IMS data channel, a payment confirm request fed back by the payment platform, with the payment confirm request generated by the payment platform according to the payment code;
send payment confirmation information to the payment platform through the IMS signaling channel or the real-time media data transmission channel or the IMS data channel, with the payment platform configured to complete the order payment according to the payment confirmation information; and
receive, through the IMS signaling channel or the IMS data channel, payment success information fed back by the payment platform.

In an embodiment, the first payment module 630 is further configured to:
in a case where the payment code is recorded to obtain a first video, send the first video to the payment platform through the real-time media data transmission channel; or,
in a case where the payment code is photographed to obtain a first image, send the first image to the payment platform through the IMS data channel.

In an embodiment, the first payment module 630 is further configured to:
in a case where the payment is performed in a payment code-displaying mode, display the payment code through a remote video window, with a code scanning terminal configured to scan the payment code and send the payment code to the payment platform;
in a case where the payment is performed without a password, receive, through the IMS signaling channel or the IMS data channel, the payment success information fed back by the payment platform; or,
in a case where the payment is performed with a password or through face recognition, receive, through the IMS signaling channel or the IMS data channel, the payment confirm request fed back by the payment platform, with the payment confirm request generated by the payment platform according to the payment code; send the payment confirmation information to the payment platform through the IMS signaling channel or the real-time media data transmission channel or the IMS data channel, with the payment platform configured to complete the order payment according to the payment confirmation information; and receive, through the IMS signaling channel or the IMS data channel, the payment success information fed back by the payment platform.

In an embodiment, the first payment module 630 is further configured to:
in the case where the payment is performed with the password, receive the password input by the user, and send the payment confirmation information carrying the password to the payment platform through the IMS signaling channel or the IMS data channel; or,
in a case where the payment is performed through face recognition and a face of the user is recorded to obtain a second video, send the payment confirmation information carrying the second video to the payment platform through the real-time media data transmission channel; or,
in a case where the payment is performed through face recognition and the face of the user is photographed to obtain a second image, send the payment confirmation information carrying the second image to the payment platform through the IMS data channel.

In an embodiment, the first payment module 630 is further configured to:
prompt the user to select a payment mode including the payment code-scanning mode and the payment code-displaying mode;
in a case where the user selects the payment mode through DTMF keys, send a selection result to the payment platform through the IMS signaling channel; or, in a case where the user selects the payment mode through voice, send the selection result to the payment platform through the real-time media data transmission channel;
receive, through the IMS signaling channel or the real-time media data transmission channel or the IMS data channel, a control instruction sent by the payment platform, with the control instruction generated by the payment platform according to the selection result; and
when the selection result corresponds to the payment code-scanning mode, turn on the camera according to the control instruction; or, when the selection result corresponds to the payment code-displaying mode, open the remote video window according to the control instruction.

In an embodiment, in the case where the payment is performed in the payment code-displaying mode, the first payment module 630 is further configured to:
receive the control instruction which does not carry the payment code through the IMS signaling channel; or,
receive the control instruction carrying a third video through the real-time media data transmission channel, with the third video obtained by recording the payment code; or,
receive the control instruction carrying a third image through the IMS data channel, with the third image obtained by photographing the payment code.

In an embodiment, the first payment module 630 is further configured to:
send order information to the payment platform through the IMS signaling channel or the IMS data channel;
receive, through the IMS signaling channel or the IMS data channel, the payment confirm request fed back by the payment platform, with the payment confirm request generated by the payment platform according to the order information;
send the payment confirmation information to the payment platform through the IMS signaling channel or the real-time media data transmission channel or the IMS data channel, with the payment platform configured to complete the order payment according to the payment confirmation information; and
receive, through the IMS signaling channel or the IMS data channel, the payment success information fed back by the payment platform.

In an embodiment, the first payment module 630 is further configured to:
in the case where the payment is performed without the password, receive the payment confirmation information input by the user, and send the payment confirmation information to the payment platform through the IMS signaling channel; or,
in the case where the payment is performed with the password, receive the password input by the user, and send the payment confirmation information carrying the password to the payment platform through the IMS signaling channel or the IMS data channel; or,
in the case where the payment is performed through face recognition and the face of the user is recorded to obtain the second video, send the payment confirmation information carrying the second video to the payment platform through the real-time media data transmission channel; or,
in the case where the payment is performed through face recognition and the face of the user is photographed to obtain the second image, send the payment confirmation information carrying the second image to the payment platform through the IMS data channel.

In summary, according to the order payment apparatus provided by the embodiments of the present disclosure, the payment call is initiated to the payment platform, the real-time media data transmission channel and the IMS data channel are established with the payment platform after the payment platform is connected with the payment call, and then the order payment is performed with the payment platform through the real-time media data transmission channel or the IMS data channel. Thus, with no need to install payment application to scan the payment code, the user can perform the order payment merely by initiating the payment call, which enables the old people to perform order payment and reduces a barrier to use of order payment. In addition, the terminal can perform the order payment with the payment platform through the real-time media data transmission channel or the IMS data channel without depending on the WIFI network, so that a success rate of order payment can be improved. Furthermore, by performing the payment through the IMS data channel, the QoS can be effectively guaranteed, and a phenomenon of payment delay caused by network congestion can be effectively avoided.

With reference to FIG. 7 which is a block diagram of an order payment apparatus according to an embodiment of the present disclosure, and the order payment apparatus may be applied in a payment platform. The order payment apparatus may include:
a receiving module 710 configured to receive a payment call initiated by a terminal;
a second establishment module 720 configured to establish, when connected with the payment call, a real-time media data transmission channel and an IMS data channel with the terminal; and
a second payment module 730 configured to perform order payment through the real-time media data transmission channel or the IMS data channel.

In an embodiment, the receiving module 710 is further configured to:
receive an SIP signaling sent by the terminal through an IMS signaling channel.

In an embodiment, the second payment module 730 is further configured to:
in a case where the payment is performed in a payment code-scanning mode, receive a payment code sent by the terminal through the real-time media data transmission channel or the IMS data channel, with the payment code obtained by the terminal through scanning with a camera;
generate a payment confirm request according to the payment code, and feed the payment confirm request back to the terminal through the IMS signaling channel or the IMS data channel;
receive, through the IMS signaling channel or the real-time media data transmission channel or the IMS data channel, payment confirmation information sent by the terminal, and complete the order payment according to the payment confirmation information; and
feed payment success information back to the terminal through the IMS signaling channel or the IMS data channel.

In an embodiment, the second payment module 730 is further configured to:
in a case where the payment code is recorded to obtain a first video, receive, through the real-time media data transmission channel, the first video sent by the terminal; or,
in a case where the payment code is photographed to obtain a first image, receive, through the IMS data channel, the first image sent by the terminal.

In an embodiment, the second payment module 730 is further configured to:
in a case where the payment is performed in a payment code-displaying mode, receive the payment code sent by a code scanning terminal, with the payment code obtained by the code scanning terminal scanning the payment code displayed on a remote video window;
in a case where the payment is performed without a password, complete the order payment according to the payment code, and feed the payment success information back to the terminal through the IMS signaling channel or the IMS data channel; or,
in a case where the payment is performed with a password or through face recognition, generate the payment confirm request according to the payment code, and feed the payment confirm request back to the terminal through the IMS signaling channel or the IMS data channel; receive, through the IMS signaling channel or the real-time media data transmission channel or the IMS data channel, the payment confirmation information sent by the terminal, and complete the order payment according to the payment confirmation information; and feed the payment success information back to the terminal through the IMS signaling channel or the IMS data channel.

In an embodiment, the second payment module 730 is further configured to:
in the case where the payment is performed with the password, receive, through the IMS signaling channel or the IMS data channel, the payment confirmation information carrying the password sent by the terminal, with the password input to the terminal by a user; or,
in the case where the payment is performed through face recognition, receive, through the real-time media data transmission channel, the payment confirmation information carrying a second video sent by the terminal, with the second video obtained by the terminal recording a face of the user; or,
in the case where the payment is performed through face recognition, receive, through the IMS data channel, the payment confirmation information carrying a second image sent by the terminal, with the second image obtained by the terminal photographing the face of the user.

In an embodiment, the second payment module 730 is further configured to:
in a case where the user selects a payment mode through DTMF keys, receive, through the IMS signaling channel, a selection result sent by the terminal; or, in a case where the user selects the payment mode through voice, receive, through the real-time media data transmission channel, the selection result sent by the terminal, with the payment mode including the payment code-scanning mode and the payment code-displaying mode; and generate a control instruction according to the selection result, and send the control instruction to the terminal through the IMS signaling channel or the real-time media data transmission channel or the IMS data channel; and
when the selection result corresponds to the payment code-scanning mode, the control instruction is configured to instruct the terminal to turn on the camera; or, when the selection result corresponds to the payment code-displaying mode, the control instruction is configured to instruct the terminal to open the remote video window.

In an embodiment, in the case where the payment is performed in the payment code-displaying mode, the second payment module 730 is further configured to:
send the control instruction which does not carry the payment code to the terminal through the IMS signaling channel; or,
send the control instruction carrying a third video to the terminal through the real-time media data transmission channel, with the third video obtained by recording the payment code; or,
send the control instruction carrying a third image to the terminal through the IMS data channel, with the third image obtained by photographing the payment code.

In an alternative embodiment, the second payment module 730 is further configured to:
receive, through the IMS signaling channel or the IMS data channel, order information sent by the terminal;
generate the payment confirm request according to the order information, and feed the payment confirm request back to the terminal through the IMS signaling channel or the IMS data channel;
receive, through the IMS signaling channel or the real-time media data transmission channel or the IMS data channel, the payment confirmation information sent by the terminal, and complete the order payment according to the payment confirmation information; and
feed the payment success information back to the terminal through the IMS signaling channel or the IMS data channel.

In an embodiment, the second payment module 730 is further configured to:
in the case where the payment is performed without the password, receive, through the IMS signaling channel, the payment confirmation information sent by the terminal, with the payment confirmation information input to the terminal by the user; or,
in the case where the payment is performed with the password, receive, through the IMS signaling channel or the IMS data channel, the payment confirmation information carrying the password sent by the terminal, with the password input to the terminal by the user; or,
in the case where the payment is performed through face recognition, receive, through the real-time media data transmission channel, the payment confirmation information carrying the second video, with the second video obtained by the terminal recording the face of the user; or,
in the case where the payment is performed through face recognition, receive, through the IMS data channel, the payment confirmation information carrying the second image, with the second image obtained by the terminal photographing the face of the user.

In summary, according to the order payment apparatus provided by the embodiments of the present disclosure, the payment call is initiated to the payment platform, the real-time media data transmission channel and the IMS data channel are established with the terminal after the payment platform is connected with the payment call, and then the order payment is performed with the terminal through the real-time media data transmission channel or the IMS data channel. Thus, with no need to install payment application to scan the payment code, the user can perform the order payment merely by initiating the payment call, which enables the old people to perform order payment and reduces a barrier to use of order payment. In addition, the terminal can perform the order payment with the payment platform through the real-time media data transmission channel or the IMS data channel without depending on the WIFI network, so that a success rate of order payment can be improved. Furthermore, by performing the payment through the IMS data channel, the QoS can be effectively guaranteed, and a phenomenon of payment delay caused by network congestion can be effectively avoided.

An embodiment of the present disclosure provides a computer-readable storage medium, which has at least one instruction, at least one program, and a code set or an instruction set stored therein, and the at least one instruction, the at least one program, and the code set or the instruction set are loaded and executed by a processor to implement any of the order payment methods described above.

An embodiment of the present disclosure provides a terminal including a processor and a memory having at least one instruction stored therein, and the instruction is loaded and executed by the processor to implement any of the order payment method described above.

An embodiment of the present disclosure provides a payment platform including a processor and a memory having at least one instruction stored therein, and the instruction is loaded and executed by the processor to implement the order payment method described above.

As for the description of the order payment apparatus provided by the above embodiments performing the payment through the payment call, the division of the above functional modules is just taken as an example for illustration. In practical applications, the above functions may be distributed to and performed by different functional modules as required, that is, the internal structure of the order payment apparatus may be divided into different functional modules to complete all or part of the functions described above. In addition, the order payment apparatus provided by the above embodiments and the order payment method embodiments belong to the same concept, and specific implementation processes of the order payment apparatus can be found in the method embodiments, and thus will not be described in detail here.

It should be understood by those of ordinary skill in the art that all or part of the operations in the above embodiments may be implemented by hardware, or by instructing related hardware with a program, the program may be stored in a computer-readable storage medium, and the storage medium described above may be a Read-Only Memory, a magnetic disk, or an optical disc.

The description above is not intended to limit the embodiments of present disclosure. Any modification, equivalent replacement and improvement made within the spirit and principle of the embodiments of the present disclosure should be included in the scope of the embodiments of the present disclosure.

## Claims

1. An order payment method, comprising:
initiating a payment call to a payment platform by a terminal;
after the payment platform is connected with the payment call, establishing a real-time media data transmission channel and an IP Multimedia Subsystem (IMS) data channel with the payment platform; and
performing order payment through the real-time media data transmission channel or the IMS data channel.

2. The method of claim 1, wherein initiating the payment call to the payment platform by the terminal comprises:
establishing an IMS signaling channel when the terminal is powered on;
receiving a payment call instruction configured to instruct the terminal to initiate the payment call to the payment platform; and
sending a Session Initiation Protocol (SIP) signaling to the payment platform through the IMS signaling channel, so as to initiate the payment call.

3. The method of claim 2, wherein receiving the payment call instruction comprises:
receiving a dialing operation triggered by a user, and determining that the payment call instruction is received in response to the dialing operation carrying a number of the payment platform; or
receiving a payment operation acted on a payment control by the user, and determining that the payment call instruction is received in response to the payment control corresponding to the payment platform.

4. The method of claim 2, wherein performing the order payment through the real-time media data transmission channel or the IMS data channel comprises:
in a case where the order payment is performed in a payment code-scanning mode, scanning a payment code through a camera;
sending the payment code to the payment platform through the real-time media data transmission channel or the IMS data channel;
receiving, through the IMS signaling channel or the IMS data channel, a payment confirm request fed back by the payment platform, with the payment confirm request generated by the payment platform according to the payment code;
sending payment confirmation information to the payment platform through the IMS signaling channel or the real-time media data transmission channel or the IMS data channel, with the payment platform configured to complete the order payment according to the payment confirmation information; and
receiving, through the IMS signaling channel or the IMS data channel, payment success information fed back by the payment platform.

5. The method of claim 4, wherein sending the payment code to the payment platform through the real-time media data transmission channel or the IMS data channel comprises:
in a case where the payment code is recorded to obtain a first video, sending the first video to the payment platform through the real-time media data transmission channel; or,
in a case where the payment code is photographed to obtain a first image, sending the first image to the payment platform through the IMS data channel.

6. The method of claim 2, wherein performing the order payment through the real-time media data transmission channel or the IMS data channel comprises:
in a case where the order payment is performed in a payment code-displaying mode, displaying a payment code through a remote video window, with a code scanning terminal configured to scan the payment code and send the payment code to the payment platform;
in a case where the order payment is performed without a password, receiving, through the IMS signaling channel or the IMS data channel, payment success information fed back by the payment platform; or,
in a case where the order payment is performed with a password or through face recognition, receiving, through the IMS signaling channel or the IMS data channel, a payment confirm request fed back by the payment platform, with the payment confirm request generated by the payment platform according to the payment code; sending payment confirmation information to the payment platform through the IMS signaling channel or the real-time media data transmission channel or the IMS data channel, with the payment platform configured to complete the order payment according to the payment confirmation information; and receiving, through the IMS signaling channel or the IMS data channel, payment success information fed back by the payment platform.

7. The method of claim 6, wherein sending the payment confirmation information to the payment platform through the IMS signaling channel or the real-time media data transmission channel or the IMS data channel comprises:
in the case where the order payment is performed with the password, receiving the password input by a user, and sending the payment confirmation information carrying the password to the payment platform through the IMS signaling channel or the IMS data channel; or,
in a case where the order payment is performed through face recognition and a face of a user is recorded to obtain a second video, sending the payment confirmation information carrying the second video to the payment platform through the real-time media data transmission channel; or,
in a case where the order payment is performed through face recognition and a face of a user is photographed to obtain a second image, sending the payment confirmation information carrying the second image to the payment platform through the IMS data channel.

8. The method of any one of claims 4 to 7, further comprising:
prompting a user to select a payment mode from a payment code-scanning mode and a payment code-displaying mode;
in a case where the user selects the payment mode through Dual Tone Multi-Frequency (DTMF) keys, sending a selection result to the payment platform through the IMS signaling channel; or, in a case where the user selects the payment mode through voice, sending a selection result to the payment platform through the real-time media data transmission channel;
receiving, through the IMS signaling channel or the real-time media data transmission channel or the IMS data channel, a control instruction sent by the payment platform, with the control instruction generated by the payment platform according to the selection result; and
when the selection result corresponds to the payment code-scanning mode, turning on the camera according to the control instruction; or, when the selection result corresponds to the payment code-displaying mode, opening the remote video window according to the control instruction.

9. The method of claim 8, wherein in the case where the order payment is performed in the payment code-displaying mode, receiving, through the IMS signaling channel or the real-time media data transmission channel or the IMS data channel, the control instruction sent by the payment platform comprises:
receiving the control instruction which does not carry the payment code through the IMS signaling channel; or,
receiving the control instruction carrying a third video through the real-time media data transmission channel, with the third video obtained by recording the payment code; or,
receiving the control instruction carrying a third image through the IMS data channel, with the third image obtained by photographing the payment code.

10. The method of claim 2, wherein performing the order payment through the real-time media data transmission channel or the IMS data channel comprises:
sending order information to the payment platform through the IMS signaling channel or the IMS data channel;
receiving, through the IMS signaling channel or the IMS data channel, a payment confirm request fed back by the payment platform, with the payment confirm request generated by the payment platform according to the order information;
sending payment confirmation information to the payment platform through the IMS signaling channel or the real-time media data transmission channel or the IMS data channel, with the payment platform configured to complete the order payment according to the payment confirmation information; and
receiving, through the IMS signaling channel or the IMS data channel, payment success information fed back by the payment platform.

11. The method of claim 4 or 10, wherein sending, through the IMS signaling channel or the real-time media data transmission channel or the IMS data channel, the payment confirmation information to the payment platform comprises:
in a case where the order payment is performed without a password, receiving the payment confirmation information input by a user, and sending the payment confirmation information to the payment platform through the IMS signaling channel; or,
in a case where the order payment is performed with a password, receiving the password input by a user, and sending the payment confirmation information carrying the password to the payment platform through the IMS signaling channel or the IMS data channel; or,
in a case where the order payment is performed through face recognition and a face of a user is recorded to obtain a second video, sending the payment confirmation information carrying the second video to the payment platform through the real-time media data transmission channel; or,
in a case where the order payment is performed through face recognition and a face of a user is photographed to obtain a second image, sending the payment confirmation information carrying the second image to the payment platform through the IMS data channel.

12. An order payment method, comprising:
receiving, by a payment platform, a payment call initiated by a terminal;
when connected with the payment call, establishing a real-time media data transmission channel and an IP Multimedia Subsystem (IMS) data channel with the terminal; and
performing order payment through the real-time media data transmission channel or the IMS data channel.

13. An order payment apparatus, comprising:
a calling module configured to initiate a payment call to a payment platform;
a first establishment module configured to establish, after the payment platform is connected with the payment call, a real-time media data transmission channel and an IP Multimedia Subsystem (IMS) data channel with the payment platform; and
a first payment module configured to perform order payment through the real-time media data transmission channel or the IMS data channel.

14. An order payment apparatus, comprising:
a receiving module configured to receive a payment call initiated by a terminal;
a second establishment module configured to establish, when connected with the payment call, a real-time media data transmission channel and an IP Multimedia Subsystem (IMS) data channel with the terminal; and
a second payment module configured to perform order payment through the real-time media data transmission channel or the IMS data channel.

15. A computer-readable storage medium having at least one instruction, at least one program, and a code set or an instruction set stored therein, wherein the at least one instruction, the at least one program, and the code set or the instruction set are loaded and executed by a processor to implement the order payment method of any one of claims 1 to 11; or, the at least one instruction, the at least one program, and the code set or the instruction set are loaded and executed by the processor to implement the order payment method of claim 12.

16. A terminal, comprising a processor and a memory having at least one instruction stored therein, wherein the at least one instruction is loaded and executed by the processor to implement the order payment method of any one of claims 1 to 11.

17. A payment platform, comprising a processor and a memory having at least one instruction stored therein, wherein the at least one instruction is loaded and executed by the processor to implement the order payment method of claim 12.

18. A payment system, comprising the terminal of claim 16, and the payment platform of claim 17.
